# EUROPEAN PATENT SPECIFICATION

(11) **EP 2 065 807 B1**
(45) Date of publication and mention of the grant of the patent: **01.09.2010**
(21) Application number: 08169411.9
(22) Date of filing: 19.11.2008
(51) Int. Cl.: G06F 11/14, G06F 11/16, H02M 5/04, H02M 5/42

(54) **Frequency converter**
Frequenzumrichter
Convertisseur de fréquence

(30) Priority: 26.11.2007 FI 20075838
(43) Date of publication of application: 03.06.2009
(73) Proprietor: ABB Oy, 00380 Helsinki (FI)
(72) Inventor: Kangas, Jani, 02210, Espoo (FI); Metso, Vesa, 00370, Helsinki (FI)
(74) Representative: Holmström, Stefan Mikael

(56) References cited:
- EP-A- 1 571 511
- EP-A- 1 847 714
- WO-A-2006/053945
- DE-A1- 4 128 803
- GB-A- 2 406 181

## Description

### FIELD OF THE INVENTION

The present invention relates to a frequency converter and particularly to the backup of frequency converter data.

### DESCRIPTION OF THE PRIOR ART

In connection with the implementation of a frequency converter, there is almost invariably need for individualization of the operation of the frequency converter for the application in question. In practice, this takes place by storing data in a memory of the frequency converter. This may involve one or more computer programs or parts of a computer program to be stored in the memory of the frequency converter for use by the controller during the use of the frequency converter. Alternatively, this may involve parameters for getting the desired settings and operation of the frequency converter. Several dozens or hundreds of such parameters may be fed into the frequency converter in connection with the implementation thereof. The problem associated with prior art frequency converters is that it is hard to backup the data in the memories thereof. In practice, the implementation of efficient backup requires manual actions of the user of the frequency converter, these actions enabling the transfer of the backup copy from the frequency converter into an external memory means. Furthermore, it is difficult to restore the backup copy for use by the frequency converter when need be.

Previously there is known from WO - A - 2006/053945 a customizable frequency converter. According to the teachings of this reference the software of a well-functioning frequency converter can be copied to another frequency converter in a problem situation. However, also this reference fails to teach or disclose an efficient way of handling backup copies of frequency converters.

### SUMMARY OF THE INVENTION

The object of the present invention is to solve the above-described problem and provide a new type of solution for implementing the backup of a frequency converter. This object is achieved with a frequency converter according to independent claim 1 and by a method according to independent claim 10.

The invention utilizes the cooperation of different frequency converters for achieving efficient and user-friendly backup. Frequency converters that are in data transmission connection with each other are able to transmit the data to be backuped to each other for storage and restoration as the need arises. Thus, the backuping and the restoration of the backup become easier and more efficient.

Preferred embodiments of the frequency converter of the invention are disclosed in the enclosed dependent claims.

### BRIEF DESCRIPTION OF THE FIGURES

In the following, the invention will be described by way of example with reference to the accompanying figures, in which
Figure 1 illustrates the backup of frequency converters,
Figure 2 is a block diagram of a frequency converter,
Figure 3 illustrates a first embodiment,
Figure 4 illustrates a second embodiment,
Figure 5 illustrates a third embodiment,
Figure 6 illustrates a fourth embodiment, and
Figure 7 illustrates a connection between frequency converters.

### DESCRIPTION OF AT LEAST ONE EMBODIMENT

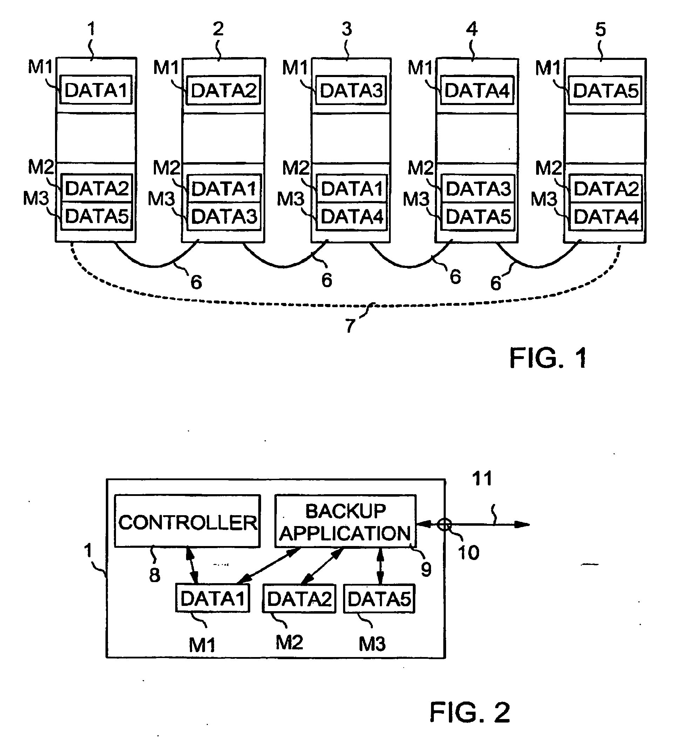

Figure 1 illustrates the backup of frequency converters. Figure 1 shows five frequency converters 1 to 5, each comprising a memory M1, in which data DATA1 to DATA5 are maintained and which are utilized by the controllers of said frequency converters for controlling the frequency converters during the operation thereof. In this context, data refers for example to programs or parts thereof and parameters for defining various set values for the operation of the frequency converters.

The frequency converters 1 to 5 are interconnected over an interface. In the example of Figure 1, this interface is in practice composed of connectors, to which cables 6 and 7 are connected. Cable 7 is not necessary, but the use thereof achieves the advantage that in case a failure occurs in a cable 6 or in case one of the frequency converters 1 to 5 is removed or fails, and the chain formed by the cables 6 is broken, all remaining frequency converters are still able to communicate with each other.

The frequency converters in Figure 1 comprise a backup application that attends to the backups of the frequency converters by retrieving data from the memory M1 thereof, and by transmitting a copy of the data retrieved over said interface to at least one other frequency converter for storage in a memory M1 or M3. The case of Figure 1 shows by way of example that a backup of the data maintained in the memory M1 of each frequency converter is maintained in the memories M2 and M3 of two other frequency converters. This is not necessary in all implementations, since the risk of data destruction is significantly reduced even with a backup copy maintained in one other frequency converter. However, the risk is still more reduced by a backup copy maintained in two different frequency converters, since in this case the data is not destroyed even if it were lost simultaneously in two different frequency converters.

It was described above with reference to Figure 1 that the data and the backup copies are maintained in the memories M1, M2 and M3. In practice, said memories may be implemented with an individual memory means in which the data of the frequency converter in question and copies of other devices are maintained, or alternatively in two or more memory means. A memory circuit or a hard disk, for example, may serve as the memory means.

Deviating from Figure 1, it is feasible that the backup copy of frequency converter 1, for example, is not maintained in its entirety in the memories of frequency converters 2 and 3, as was shown in the figure, but that the backup copes are decentralized. Accordingly, a first backup copy may be divided between frequency converters 2 and 3, for example, and a second between frequency converters 3 and 5.

Figure 2 is a block diagram of the frequency converter 1 of Figure 1. The frequency converter 1 comprises a controller, which, based on the data DATA1 stored in the memory M1, controls the operation of the frequency converter during the operation thereof. The frequency converter 1 further comprises a backup application 9 that attends to the backuping of the data stored in the memory M1 of the frequency converter and the backup copies DATA2 and DATA3 of the other frequency converters maintained in the memories M2 and M3. In practice, the controller and the backup application may be implemented by circuit solutions or one or more processors that execute a specified computer program.

In this example, the frequency converter 1 communicates with the other frequency converters over an interface 10, via which the frequency converter 1 is connected to a bus 11. The data transmission technique between the frequency converters may be UART (Universal Asynchronous Receiver Transmitter), I2C (Inter-Integrated Circuit), Ethernet, Field Bus, Bluetooth, WLAN (Wireless Local Area Network) or any other practical manner for transmitting digital data between devices.

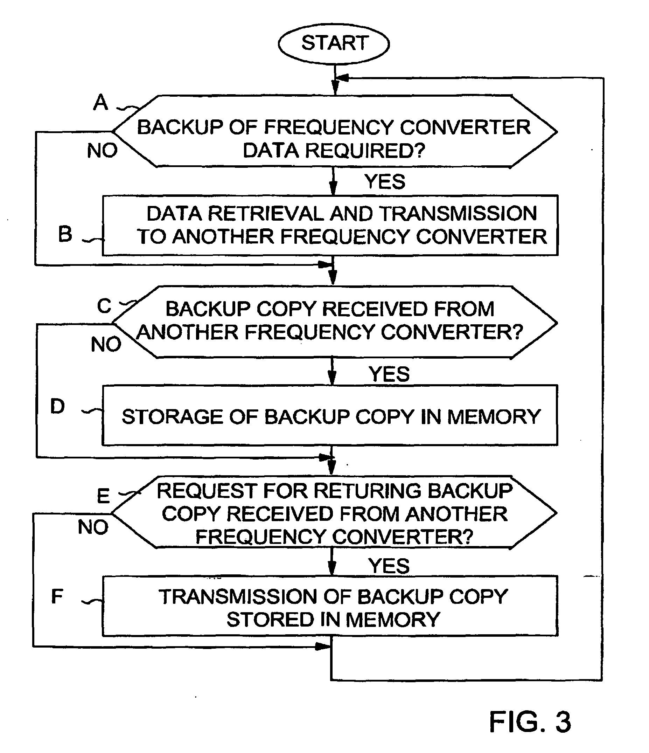

Figure 3 illustrates a first embodiment of the operation of a frequency converter. For example, the frequency converters shown in connection with Figures 1 and 2 may be arranged to operate in accordance with the flow diagram of Figure 3.

For example, in connection with the implementation of a frequency converter, the frequency converter(s) to which the frequency converter to be implemented transmits its backup copies and from which it receives backup copies to be maintained in the memory are determined. This may take place in a plurality of alternative manners, such as:

1) The user of the frequency converter inputs information about at least one other frequency converter to which a backup copy is to be transmitted in the frequency converter. The information may be composed of a connector, for example, via which the backup copy is to be transmitted and to which the frequency converter receiving the backup copy is connected, or the identifier (name, serial number or address) of the other frequency converter, to which the backup copy to be transmitted is to be addressed when the frequency converter transmits it via the bus.

2) In connection with the start-up, the frequency converter is arranged to transmit, via the bus, a predetermined message notifying that it has been connected to the bus and, in response to this message, to receive information from other frequency converters connected to the bus about their identifiers. Accordingly, the frequency converter receives information about the identifiers of all the other frequency converters to which it has a connection via the bus. Based on a given algorithm, the frequency converter may then select the other frequency converter(s) to which it transmits its backup copy. Alternatively, one of the frequency converters connected to the bus may serve as a master frequency converter that transmits information to the frequency converter about the identifiers of the frequency converters to which the backup copy is to be transmitted.

When the frequency converter is aware of the other frequency converter(s) to which it is to transmit its backup copy, the backup application of the frequency converter checks, in block A, if it is the proper time for data backuping. Backuping may become current for instance when the user of the frequency converter inputs a given control command in the frequency converter after a given time has lapsed from the previous backuping, when a given amount of non-updated data has been stored in the memory M1 of the frequency converter, or when the frequency converter shifts to a predetermined state of operation. Such a state of operation may be for instance storage of user-input parameters in the memory or storage of a program update in the memory of the frequency converter.

If data backuping is of immediate interest, the backup application retrieves, in block B, data from the memory of the frequency converter and transmits the data retrieved over an interface to at least one other frequency converter, in which the backup copy is maintained. Herein, depending on the situation, the data to be retrieved from the memory may be composed of the entire data contents of the memory M1 or only of given data stored in the memory, in which case the data in question may be those stored in the memory after the backup was latest implemented. For maintaining this information, the backup application 9 preferably maintains a list indicating which data was backuped and when.

In block C, the backup application receives a backup copy from another frequency converter over the interface via which said frequency converters have a data transmission connection with each other. In block D, the backup application 9 stores the backup copy received in the memory M2 or M3.

In block E, it is checked if the backup application 9 has received a request for returning the backup copy to be maintained in the memory M2 or M3 thereof to the other frequency converter. The backup application 9 may receive such a request from the user of the frequency converter over a user interface or, alternatively, from the other frequency converter over the interface via which said frequency converters have a data transmission connection with each other. For example in this case, the user may have given a command to said other frequency converter manually over the user interface to request for restoration of the backup copy. In other words, in connection with the installation of a new frequency converter, the user defines the identifier of the failed frequency converter to be the identifier of the new frequency converter, and triggers the new frequency converter to transmit a request to the bus for restoration of the backup copy. The other frequency converters connected to the bus receive this request, and the frequency converter maintaining said backup copy detects, based on the identifier included in the request, that it has the backup copy requested in its memory M2 or M3.

If it is detected in block E that a request for restoration of the backup copy has been received, then, in block F, the backup application 9 transmits a copy of the backup copy stored in the memory M2 or M3 over the interface to the frequency converter for which said backup copy has been maintained.

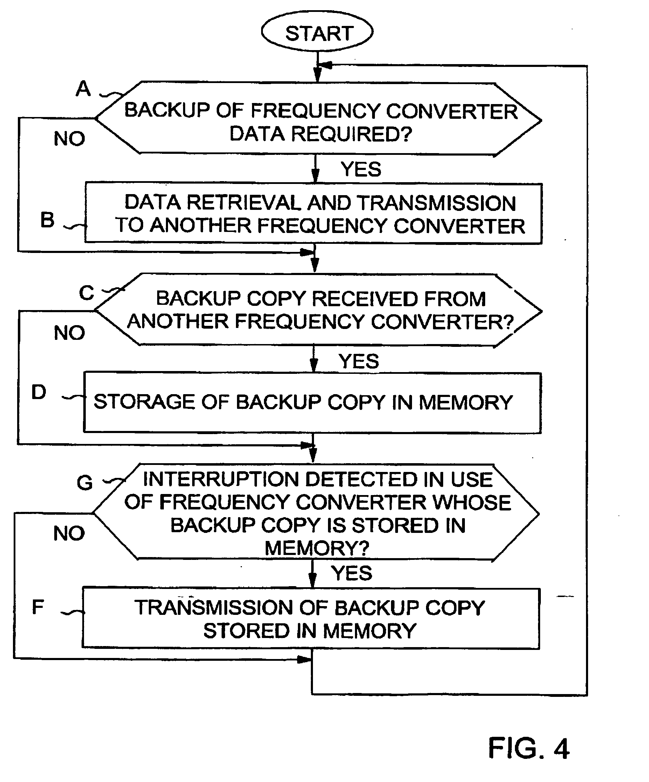

Figure 4 illustrates a second embodiment of the operation of a frequency converter. The embodiment of Figure 4 largely corresponds to the embodiment of Figure 3, wherefore the embodiment of Figure 4 will be described in the following primarily by bringing forth the differences between these embodiments.

The embodiment of Figure 4 does not include the step of block E, instead it includes block G, wherein it is checked if an interruption in use has been detected in the frequency converter whose backup copy is stored in the memory M2 or M3 of the frequency converter. This means that in the embodiment of Figure 4, the backup application 9 of the frequency converter monitors, over the interface, the operation of the frequency converter(s) for which a backup copy is maintained in the memory M2 or M3. Depending on the implementation, the monitoring may involve periodical transmission of a given message by the frequency converter to the frequency converters whose backup copies it maintains, and, in response to this message transmitted, receives a predetermined reply if no interruption in use has occurred.

An interruption in use means that no connection can be established to the second frequency converter. This may involve an interruption in the use of the second frequency converter or in the data transmission connection between these frequency converters. The backup application 9 may be configured to automatically transmit, in block F, a copy of the backup copy maintained in the memory M2 or M3 thereof to the second frequency converter once the interruption in use detected for said frequency converter has ended. Accordingly, said second frequency converter may automatically, for instance after an interruption in use, receive a backup copy to its use, which can thus be automatically restored to the use of said second frequency converter.

The advantage achieved by the embodiment of Figure 4 is that if a frequency converter fails and a maintenance man replaces the failed frequency converter with another frequency converter, the backup copy of the failed frequency converter can be automatically restored in the new frequency converter without the maintenance man having to find out where the backup copy is to be found and manually install the backup copy found into the new frequency converter. Such automatic restoration of a backup copy succeeds at least in situations when the identifier of the failed frequency converter is given to the new frequency converter or when the new frequency converter is connected in place of the failed frequency converter, and directly connected with a cable to the second frequency converter wherein said backup copy is maintained.

In the case of Figure 4, the naming of a new frequency converter may be automated such that after the frequency converter has been taken into use, it is configured to transmit a predetermined message via a bus, whereby all frequency converters receiving this message reply to it by notifying their own identifier, i.e. their name in this example. If the naming of the frequency converter is herein implemented by utilizing a give algorithm (e.g. frequency converter 1, frequency converter 2, frequency converter 3, ... etc.), the new frequency converter is able to identify the name of the frequency converter that has not replied to the message based on the identifiers received, and then take the name (identifier) of said frequency converter into use.

Naming all frequency converters (allocation of addresses or identifiers) may also be automated as follows, for example. In this case, as preparatory actions, all frequency converters have been installed, the bus connecting them has been constructed, and individual frequency converters have been parametrized. A user initiates the naming from whichever frequency converter serving as a coordinator. The coordinator transmits an initiating message to the bus. The structure of the message is selected such that each device on the bus reads and .interprets it (broadcast). Each device transmits, to the coordinator, a request for reserving the following free bus address to it. The devices transmit this message after a random delay from the initiating message. The device listens to the bus during the delay and delays its own message if the bus becomes reserved. Once the coordinator has received a reservation request for an individual name (bus address), it transmits, to this device, information about the reservation. The other devices initiate the calculation of a new random delay only after receiving this message from the bus. When no traffic has occurred on the bus for a sufficiently long time, the coordinator interprets that addresses have been allocated to all devices. For itself, the coordinator reserves the first or last address of the bus, for example.

After the naming, for initiating backup copying, the coordinator requests that the first device of the bus transmit its backup copy to the bus. Some simple algorithm is used for calculating those who store the backup copy. If the backup copy is requested in two different devices, an agreement may be made to store the backup copy in two following devices on the bus, for example. Those who store the backup copy transmit information to the transmitter of the date about the success of the storage. Having ended the transmission, an individual device gives the transmission turn to the device having the following address. Once the coordinator sees that all backup copies have been successfully made, it transmits information thereof to all devices and indicates the success in its user interface. The progress of the process may also be indicated. In addition to the coordinator, these issues may also be indicated at the user interface of each individual device.

In the above-described solution, it may be checked, after each start-up, that all devices are in the bus. For example, after a power failure, the coordinator transmits an inquiry to all devices of the bus, and finally transmits a broadcast message to all devices indicating that the devices may shift to a normal state of use. If the original coordinator does not initiate the check within a determined period of time, the device having the following address assumes the role of the coordinator. If one or more devices are missing from the bus, the coordinator gives an error indication and an error report thereof to the user. The error may be indicated also on the displays of the other devices on the bus. When the absence of one device is detected, the coordinator searches the bus for a replacing device. This may take place either automatically or at the user's command. When a new device has been found on the bus, the data stored in the other devices of the bus is restored thereto.

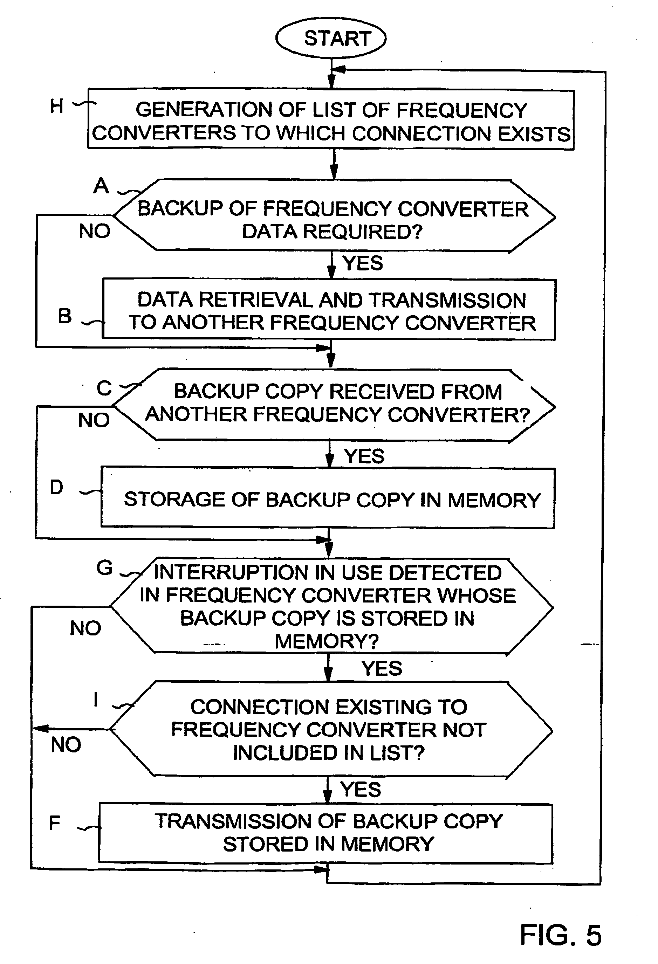

Figure 5 illustrates a third embodiment of the operation of a frequency converter. The embodiment of Figure 5 largely corresponds to the embodiment of Figure 4, wherefore the embodiment of Figure 5 is described in the following mainly by bringing forth the differences between these embodiments.

In the case of Figure 5, the backup application 9 of the frequency converter 1 maintains, in the memory M1, a list of the frequency converters 2 to 5 with which the frequency converter 1 has a connection over an interface 10. In practice, said list may be composed of the identifiers, for example, of the frequency converters 2 to 5 (name, serial number or address). To generate the list, the frequency converter may, for instance at determined intervals, transmit a predetermined message over the interface 10 and a bus 11, notifying its identifier and connection to the bus, and, correspondingly, receive, from the other frequency converters connected to the bus, information about the identifiers thereof.

When the backup application of the frequency converter has detected, in block G, an interruption in use in a frequency converter whose backup copy is stored in the memory M2 or M3 of the frequency converter (in a manner similar to that of Figure 4), it checks, in block I, if it has a connection over the interface 10 to a frequency converter whose identifier is not included in the list. This may take place for instance by the frequency converter receiving, after the detection of the interruption in use, an identifier not included in the list maintained thereby over the interface from a second frequency. The assumption in such a situation is that such a failure has occurred in the frequency converter whose backup copy is stored in the memory M2 or M3 of the frequency converter that it has been replaced with another frequency converter by the maintenance personnel, whose identifier is thus not included in the list. Accordingly, in block F, the backup application transfers the backup copy stored in the memory M2 or M3 thereof to the new frequency converter for automatically configuring it to operate in a manner similar to that of the failed frequency converter it replaced.

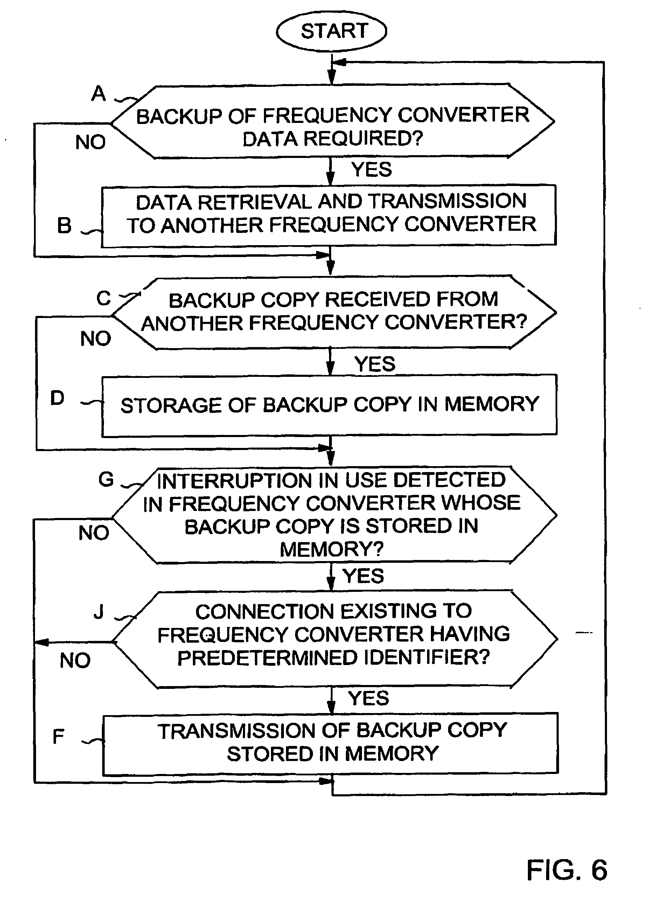

Figure 6 illustrates a fourth embodiment of the operation of a frequency converter. The embodiment of Figure 6 largely corresponds to the embodiment of Figure 4, wherefore the embodiment of Figure 6 is described in the following mainly by bringing forth the differences between these embodiments.

Once the backup application of the frequency converter has detected, in block G, an interruption in the use of a frequency converter whose backup copy is stored in the memory M2 or M3 of the frequency converter (in a manner similar to that of Figure 4), it checks, in block J, if it has a connection over the interface 10 to a frequency converter who has a predetermined identifier. This may take place for instance by the frequency converter receiving, after the detection of the interruption in use, over the interface, a message including a predetermined identifier from another frequency converter. In this embodiment, the new frequency converter to be installed in place of the failed frequency converter is always given the same predetermined identifier. Accordingly, this predetermined identifier indicates that a new frequency converter added in place of a failed one is concerned.

In block F, the backup application thus retrieves a backup copy from the memory M2 or M3 that has been maintained for the frequency converter for which an interruption in use was detected, and transmits it to a frequency converter having the predetermined identifier. Consequently, the new frequency converter is automatically configured to operate in a manner similar to that of the failed frequency converter it replaced. The new frequency converter is also preferably configured to automatically change its identifier to correspond to the identifier of the failed frequency converter included in the backup copy received when restoring the backup copy to the use thereof. The predetermined identifier is then freed for use the next time a frequency converter has to be replaced with a new one.

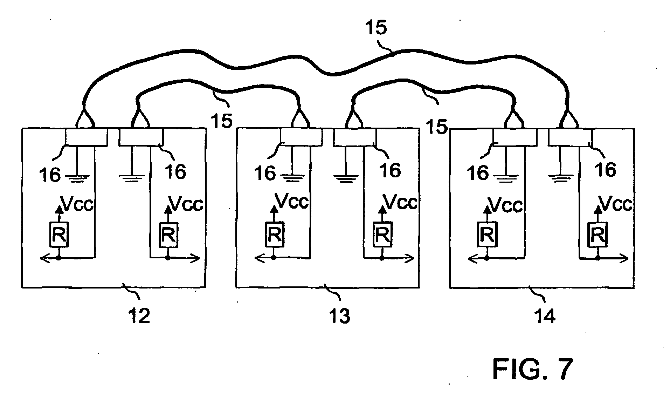

Figure 7 illustrates a connection between frequency converters. In the case of Figure 7, frequency converters 12, 13 and 14 comprise connectors 16 interconnected with cross-connected cables.

Owing to such a connection, frequency converter 13, for example, immediately detects the removal of frequency converter 12, since the detachment of the cross-connected cable 15 is followed by a change detectable by the connector 16. Correspondingly, frequency converter 13 detects the restoration in place of the removed frequency converter 12 or a frequency converter replacing it because of the attachment of the cross-connection cable. In such a situation, frequency converter 13 may be configured to transmits a backup copy maintained for frequency converter 12 for the use of frequency converter 12, either via a cable (not shown in the figure) between them or, alternatively, via a bus (not shown in the figure), to which both frequency converters are connected. The data transmission cable may be physically arranged in the same cable with the cross-connected cable 15, whereby it is composed of different conductors that are also connected to the frequency converter via the connector 16.

It is to be understood that the above specification and the related figures are only intended to illustrate the present invention. Different variations and modifications of the invention will be apparent to a person skilled in the art, without deviating from the scope of protection of the invention.

## Claims

1. A frequency converter (1 to 5; 12 to 14) comprising:
a memory (M1) for storing data;
a controller (8) for controlling the operation of the frequency converter by utilizing data (DATA1 to DATA5) stored in the memory (M1); and
an interface (10) for connecting the frequency converter to other frequency converters, **characterized in that** the frequency converter comprises a backup application (9) for
backuping the data (DATA1 to DATA5) stored in the memory (M1) of the frequency converter by retrieving data stored in the memory of the frequency converter and by transmitting the data retrieved over the interface (10) to at least one other frequency converter for storage in a memory (M2, M3) of said at least one other frequency converter;
maintaining a backup copy (DATA1 to DATA5) of at least one other frequency converter by storing the data received over the interface (10) from said at least one other frequency converter in the memory (M2, M3); and
restoring said backup copy (DATA1 to DATA5) over the interface (10) to an other frequency converter for use by said other frequency converter in response to a request received from the user of the frequency converter over a user interface or from said at least one other frequency converter, or in response to a result of monitoring said at least one other frequency converter.

2. A frequency converter as claimed in claim 1, **characterized in that** the backup application (9) transmits said retrieved data (DATA1 to DATA5) over the interface (10) to at least two other frequency converters for storage, and maintains backup copies of at least two other frequency converters in the memory (M2, M3).

3. A frequency converter as claimed in claim 1 or 2, **characterized in that** the backup application (9) is arranged to transmit (F) a backup copy (DATA1 to DATA5) maintained for said at least one other frequency converter in the memory (M2, M3) to said at least one other frequency converter over the interface (10) in response to a request (G) received by the frequency converter from said at least one other frequency converter.

4. A frequency converter as claimed in claim 1 or 2, **characterized in that** the backup application (9) monitors (G), over said interface (10), the operation of the frequency converter or the frequency converters whose backup copies the backup application (9) maintains in the memory (M2, M3), and transmits (F) a copy of the backup copy maintained in the memory (M2, M3) after the end of a detected interruption in use for use by the frequency converter for which the interruption in use was detected.

5. A frequency converter as claimed in claim 1 or 2, **characterized in that**
the backup application (9) maintains (H), in the memory, a list of the frequency converters to which the frequency converter has a connection over said interface (10);
the backup application (9) monitors (G), over said interface (10), the operation of at least the frequency converter or the frequency converters whose backup copies the backup application maintains in the memory (M2, M3); and
when the backup application (9) detects that an interruption in use occurs in a frequency converter monitored thereby, and the frequency converter has a connection (I) to a frequency converter not included in the list, the backup application (9) transmits (F) a copy of the backup copy maintained in the memory (M2, M3) for the frequency converter for which the interruption in use was detected, to the frequency converter not included in the list.

6. A frequency converter as claimed in claim 1 or 2, **characterized in that**
the backup application (9) monitors (G), over said interface (10), the operation of at least the frequency converter or the frequency converters whose backup copies the backup application maintains in the memory (M2, M3); and
when the backup application (9) detects that an interruption in use occurs in a frequency converter monitored thereby, and the frequency converter has a connection (J) to a frequency converter having a predetermined identifier, the backup application (9) transmits a copy of the backup copy maintained in the memory (M2, M3) for the frequency converter for which the interruption in use was detected, to the frequency converter having said predetermined identifier.

7. A frequency converter as claimed in claim 1 or 2, **characterized in that** the frequency converter (1 to 5) is arranged to retrieve, over the interface (10), the identifiers of the frequency converters to which it is connected over said interface (10), and define an identifier for itself by utilizing the identifiers retrieved and a predetermined algorithm.

8. A frequency converter as claimed in any one of claims 1 to 7, **characterized in that** the backup application (9) is responsive to a predetermined control command for implementing said backup copying.

9. A frequency converter as claimed in any one of claims 1 to 7, **characterized in that** the backup application (9) is arranged to implement said backup copying in predetermined situations or at determined intervals.

10. A method of maintaining data stored in a memory of a frequency converter, **characterized by**
transmitting (A, B) a backup copy of data stored in a memory of a first frequency converter to a second frequency converter via a data transmission connection and maintaining in a memory of the first frequency converter a backup copy of at least one other frequency converter;
maintaining in said second frequency converter data of said second frequency converter and said backup copy from said first frequency converter by storing (D) said backup copy received from said first frequency converter in a memory;
monitoring (E) the operation of the first frequency converter with the second frequency converter; and
restoring (F) said backup copy over the data transmission connection from the second frequency converter for use by the first frequency converter when a situation where the first frequency converter no longer has the backuped data available, is detected as the result of the monitoring.

## Patentansprüche

1. Frequenzumrichter (1-5,12-14), umfassend:
- einen Speicher (M1) zur Speicherung von Daten,
- eine Steuereinheit (8) zur Steuerung des Betriebs des Frequenzumrichters unter Verwendung von im Speicher (M1) gespeicherten Daten (DATA1-DATA5), und
- eine Schnittstelle (10) zur Verbindung des Frequenzumrichters mit anderen Frequenzumrichtern,
**dadurch gekennzeichnet, dass**
der Frequenzumrichter eine Sicherungsanwendung (9) umfasst, die folgenden Zweck erfüllt:
- Sichern der im Speicher (M1) des Frequenzumrichters gespeicherten Daten (DATA1-DATA5) durch Abrufen der im Speicher des Frequenzumrichters gespeicherten Daten und durch Übertragen der abgerufenen Daten über die Schnittstelle (10) an wenigstens einen anderen Frequenzumrichter, zum Zweck der Speicherung in einem Speicher (M2,M3) des wenigstens einen anderen Frequenzumrichters,
- Verwahren einer Sicherungskopie (DATA1-DATA5) wenigstens eines anderen Frequenzumrichters durch Speichern der von dem wenigstens einen anderen Frequenzumrichter über die Schnittstelle (10) empfangenen Daten im Speicher (M2,M3), und
- Wiederherstellen der Sicherungskopie (DATA1-DATA5) in einem anderen Frequenzumrichter über die Schnittstelle (10) zur Benutzung durch den anderen Frequenzumrichter als Reaktion auf eine vom Benutzer des Frequenzumrichters über eine Benutzerschnittstelle oder vom wenigstens einen anderen Frequenzumrichter empfangene Anfrage oder als Reaktion auf ein Ergebnis einer Überwachung des wenigstens einen anderen Frequenzumrichters.

2. Frequenzumrichter nach Anspruch 1, **dadurch gekennzeichnet, dass** die Sicherungsanwendung (9) die abgerufenen Daten (DATA1-DATA5) über die Schnittstelle (10) zum Zweck der Speicherung an mindestens zwei andere Frequenzumrichter überträgt, und Sicherungskopien von wenigstens zwei anderen Frequenzumrichtern im Speicher (M2, M3) verwahrt.

3. Frequenzumrichter nach Anspruch 1 oder 2, **dadurch gekennzeichnet, dass** die Sicherungsanwendung (9) derart ausgestaltet ist, um eine für den wenigstens einen anderen Frequenzumrichter im Speicher (M2, M3) verwahrte Sicherungskopie (DATA1-DATA5) über die Schnittstelle (10) zu dem mindestens einen anderen Frequenzumrichter als Reaktion auf eine Anfrage (G), die durch den Frequenzumrichter von dem wenigstens einen anderen Frequenzumrichter empfangen wurde, zu übertragen (F).

4. Frequenzumrichter nach Anspruch 1 oder 2, **dadurch gekennzeichnet, dass** die Sicherungsanwendung (9) den Betrieb des Frequenzumrichters oder der Frequenzumrichter, deren Sicherungskopien die Sicherungsanwendung (9) im Speicher (M2, M3) verwahrt, über die Schnittstelle (10) überwacht (G), und eine Kopie der im Speicher (M2, M3) verwahrten Sicherungskopie nach dem Ende einer erkannten Betriebsunterbrechung zum Zweck der Benutzung durch den Frequenzumrichter, für welchen die Betriebsunterbrechung erkannt wurde, überträgt (F).

5. Frequenzumrichter nach Anspruch 1 oder 2, **dadurch gekennzeichnet dass**
- die Sicherungsanwendung (9) im Speicher eine Liste der Frequenzumrichter verwahrt (H), zu welchen der Frequenzumrichter eine Verbindung über die Schnittstelle (10) aufweist,
- die Sicherungsanwendung (9) über die Schnittstelle (10) den Betrieb von mindestens dem Frequenzumrichter oder den Frequenzumrichtern, deren Sicherungskopien die Sicherungsanwendung im Speicher (M2, M3) verwahrt, überwacht (G), und
- für den Fall, dass die Sicherungsanwendung (9) erkennt, dass eine Betriebsunterbrechung in einem von ihr überwachten Frequenzumrichter auftritt, und der Frequenzumrichter eine Verbindung (I) zu einem nicht in der Liste enthaltenen Frequenzumrichter aufweist, die Sicherungsanwendung (9) eine Kopie der im Speicher (M2, M3) für den Frequenzumrichter, für den die Betriebsunterbrechung erkannt wurde, verwahrten Sicherungskopie zu dem nicht in der Liste enthaltenen Frequenzumrichter überträgt (F).

6. Frequenzumrichter nach Anspruch 1 oder 2, **dadurch gekennzeichnet, dass**
- die Sicherungsanwendung (9) über die Schnittstelle (10) den Betrieb von mindestens dem Frequenzumrichter oder den Frequenzumrichtern, deren Sicherungskopien die Sicherungsanwendung im Speicher (M2, M3) verwahrt, überwacht (G), und
- für den Fall, dass die Sicherungsanwendung (9) erkennt, dass eine Betriebsunterbrechung in einem von ihr überwachten Frequenzumrichter auftritt, und der Frequenzumrichter eine Verbindung (J) zu einem Frequenzumrichter, der eine vorgegebene Kennung besitzt, aufweist, die Sicherungsanwendung (9) eine Kopie der im Speicher (M2, M3) für den Frequenzumrichter, für den die Betriebsunterbrechung erkannt wurde, verwahrten Sicherungskopie zu dem Frequenzumrichter mit der vorgegebenen Kennung überträgt.

7. Frequenzumrichter nach Anspruch 1 oder 2, **dadurch gekennzeichnet, dass** der Frequenzumrichter (1-5) derart ausgestaltet ist, um über die Schnittstelle (10) die Kennungen der Frequenzumrichter, mit welchen er über die Schnittstelle (10) verbunden ist, abzurufen, und eine Kennung für sich selbst unter Verwendung der abgerufenen Kennungen und eines vorgegebenen Algorithmus zu bestimmen.

8. Frequenzumrichter nach einem der Ansprüche 1 bis 7, **dadurch gekennzeichnet dass** die Sicherungsanwendung (9) so ausgestaltet ist, dass sie auf einen vorgegebenen Steuerbefehl zur Ausführung des Sicherungskopierens reaktionsfähig ist.

9. Frequenzumrichter nach einem der Ansprüche 1 bis 7, **dadurch gekennzeichnet, dass** die Sicherungsanwendung (9) derart ausgestaltet ist, dass sie das Sicherungskopieren in vorgegebenen Situationen oder zu vorgegebenen Intervallen ausführt.

10. Verfahren zum Verwahren von in einem Speicher eines Frequenzumrichters gespeicherten Daten, **gekennzeichnet durch**
- Übertragen (A,B) einer Sicherungskopie von in einem Speicher eines ersten Frequenzumrichters gespeicherten Daten zu einem zweiten Frequenzumrichter über eine Datenübertragungsverbindung, und Verwahren einer Sicherungskopie von wenigstens einem anderen Frequenzumrichter in einen Speicher des ersten Frequenzumrichters,
- Verwahren von Daten des zweiten Frequenzumrichters und der Sicherungskopie vom ersten Frequenzumrichter im zweiten Frequenzumrichter, **durch** Speichern (D) der vom ersten Frequenzumrichter empfangenen Sicherungskopie in einem Speicher,
- Überwachen (E) des Betriebs des ersten Frequenzumrichters durch den zweiten Frequenzumrichter, und
- Wiederherstellen (F) der Sicherungskopie über die Datenübertragungsverbindung vom zweiten Frequenzumrichter zur Verwendung **durch** den ersten Frequenzumrichter dann, wenn eine Situation, in der der erste Frequenzumrichter die gesicherten Daten nicht mehr verfügbar hat, als Ergebnis des Überwachens erkannt wird.

## Revendications

1. Convertisseur de fréquence (1 à 5 ; 12 à 14) comprenant :
une mémoire (M1) pour mémoriser des données ;
un contrôleur (8) pour commander le fonctionnement du convertisseur de fréquence en utilisant des données (DATA1 à DATAS) mémorisées dans la mémoire (M1) ; et
une interface (10) pour connecter le convertisseur de fréquence à d'autres convertisseurs de fréquence, **caractérisé en ce que** le convertisseur de fréquence comprend une application de sauvegarde (9) pour
sauvegarder les données (DATA1 à DATAS) mémorisées dans la mémoire (M1) du convertisseur de fréquence en récupérant des données mémorisées dans la mémoire du convertisseur de fréquence et en transmettant les données récupérées sur l'interface (10) à au moins un autre convertisseur de fréquence pour leur mémorisation dans une mémoire (M2, M3) dudit au moins un autre convertisseur de fréquence ;
maintenir une copie de sauvegarde (DATA1 à DATAS) d'au moins un autre convertisseur de fréquence en mémorisant les données reçues sur l'interface (10) dudit au moins un autre convertisseur de fréquence dans la mémoire (M2, M3) ; et
restituer ladite copie de sauvegarde (DATA1 à DATAS) sur l'interface (10) à un autre convertisseur de fréquence pour son utilisation par ledit autre convertisseur de fréquence en réponse à une demande reçue dudit au moins un autre convertisseur de fréquence ou en réponse à un résultat de surveillance dudit au moins un autre convertisseur de fréquence.

2. Convertisseur de fréquence selon la revendication 1, **caractérisé en ce que** l'application de sauvegarde (9) transmet lesdites données récupérées (DATA1 à DATAS) sur l'interface (10) à au moins deux autres convertisseurs de fréquence pour leur mémorisation, et maintient des copies de sauvegarde d'au moins deux autres convertisseurs de fréquence dans la mémoire (M2, M3).

3. Convertisseur de fréquence selon la revendication 1 ou 2, **caractérisé en ce que** l'application de sauvegarde (9) est agencée pour transmettre (F) une copie de sauvegarde (DATA1 à DATAS) maintenue pour ledit au moins un autre convertisseur de fréquence dans la mémoire (M2, M3) audit au moins un autre convertisseur de fréquence sur l'interface (10) en réponse à une demande (G) reçue par le convertisseur de fréquence dudit au moins un autre convertisseur de fréquence.

4. Convertisseur de fréquence selon la revendication 1 ou 2, **caractérisé en ce que** l'application de sauvegarde (9) surveille (G), sur ladite interface (10), le fonctionnement du convertisseur de fréquence ou des convertisseurs de fréquence dont les copies de sauvegarde sont maintenues par l'application de sauvegarde (9) dans la mémoire (M2, M3), et transmet (F) une copie de la copie de sauvegarde maintenue dans la mémoire (M2, M3) à la fin d'une interruption en utilisation détectée pour une utilisation par le convertisseur de fréquence pour lequel l'interruption en utilisation a été détectée.

5. Convertisseur de fréquence selon la revendication 1 ou 2, **caractérisé en ce que**
l'application de sauvegarde (9) maintient (H), dans la mémoire, une liste des convertisseurs de fréquence vers lesquels le convertisseur de fréquence a une connexion sur ladite interface (10) ;
l'application de sauvegarde (9) surveille (G), sur ladite interface (10), le fonctionnement au moins du convertisseur de fréquence ou des convertisseurs de fréquence dont les copies de sauvegarde sont maintenues par l'application de sauvegarde dans la mémoire (M2, M3) ; et
lorsque l'application de sauvegarde (9) détecte qu'une interruption en utilisation s'est produite dans un convertisseur de fréquence surveillé par celle-ci, et que le convertisseur de fréquence a une connexion (1) vers un convertisseur de fréquence non inclus dans la liste, l'application de sauvegarde (9) transmet (F) une copie de la copie de sauvegarde maintenue dans la mémoire (M2, M3) pour le convertisseur de fréquence pour lequel l'interruption en utilisation a été détectée au convertisseur de fréquence non inclus dans la liste.

6. Convertisseur de fréquence selon la revendication 1 ou 2, **caractérisé en ce que**
l'application de sauvegarde (9) surveille (G), sur ladite interface (10), le fonctionnement au moins du convertisseur de fréquence ou des convertisseurs de fréquence dont les copies de sauvegarde sont maintenues par l'application de sauvegarde dans la mémoire (M2, M3) ; et
lorsque l'application de sauvegarde (9) détecte qu'une interruption en utilisation s'est produite dans un convertisseur de fréquence surveillé par celle-ci, et que le convertisseur de fréquence a une connexion (J) vers un convertisseur de fréquence ayant un identifiant prédéterminé, l'application de sauvegarde (9) transmet une copie de la copie de sauvegarde maintenue dans la mémoire (M2, M3) pour le convertisseur de fréquence pour lequel l'interruption en utilisation a été détectée au convertisseur de fréquence ayant ledit identifiant prédéterminé.

7. Convertisseur de fréquence selon la revendication 1 ou 2, **caractérisé en ce que** le convertisseur de fréquence (1 à 5) est agencé pour récupérer, sur l'interface (10), les identifiants des convertisseurs de fréquence auxquels il est connecté sur ladite interface (10), et définir un identifiant pour lui-même en utilisant les identifiants récupérés et un algorithme prédéterminé.

8. Convertisseur de fréquence selon l'une quelconque des revendications 1 à 7, **caractérisé en ce que** l'application de sauvegarde (9) est sensible à une commande de contrôle prédéterminée pour effectuer ladite copie de sauvegarde.

9. Convertisseur de fréquence selon l'une quelconque des revendications 1 à 7, **caractérisé en ce que** l'application de sauvegarde (9) est agencée pour effectuer ladite copie de sauvegarde dans des situations prédéterminées ou à des intervalles déterminés.

10. Procédé de maintien de données mémorisées dans une mémoire d'un convertisseur de fréquence, **caractérisé par**
la transmission (A, B) d'une copie de sauvegarde de données mémorisées dans une mémoire d'un premier convertisseur de fréquence à un deuxième convertisseur de fréquence par l'intermédiaire d'une connexion de transmission de données et le maintien, dans une mémoire du premier convertisseur de fréquence, d'une copie de sauvegarde d'au moins un autre convertisseur de fréquence ;
le maintien dans ledit deuxième convertisseur de fréquence des données dudit deuxième convertisseur de fréquence et de ladite copie de sauvegarde provenant dudit premier convertisseur de fréquence en mémorisant (D) ladite copie de sauvegarde reçue dudit premier convertisseur de fréquence dans une mémoire ;
la surveillance (E) du fonctionnement du premier convertisseur de fréquence par le deuxième convertisseur de fréquence ; et
la restitution (F) de ladite copie de sauvegarde sur la connexion de transmission de données à partir du deuxième convertisseur de fréquence pour son utilisation par le premier convertisseur de fréquence lorsqu'une situation dans laquelle le premier convertisseur de fréquence ne dispose plus des données sauvegardées est détectée en tant que résultat de la surveillance.
